# EUROPÄISCHE PATENTSCHRIFT

(11) **EP 3 810 398 B1**
(45) Veröffentlichungstag und Bekanntmachung des Hinweises auf die Patenterteilung: **29.11.2023**
(21) Anmeldenummer: 19734056.5
(22) Anmeldetag: 25.06.2019
(51) Int. Cl.: B29C 49/48, B29L 31/00

(54) **VORRICHTUNG ZUR HERSTELLUNG VON BEHÄLTERN DURCH BLASFORMEN**
DEVICE FOR PRODUCING CONTAINERS BY BLOW MOULDING
DISPOSITIF DE PRODUCTION DE RECIPIENTS PAR MOULAGE PAR SOUFFLAGE

(30) Priorität: 25.06.2018 DE 102018115189
(43) Veröffentlichungstag der Anmeldung: 28.04.2021
(73) Patentinhaber: KHS GmbH, 44143 Dortmund (DE)
(72) Erfinder: KLATT, Dieter, 22147 Hamburg (DE); HERKLOTZ, Thorsten, 22926 Ahrensburg (DE); LESINSKI, Werner, 22926 Ahrensburg (DE); GODAU, Günther, 22145 Hamburg (DE); HAUBENSCHILD, Jens-Uwe, 22397 Hamburg (DE)
(74) Vertreter: Eisenführ Speiser
(86) Internationale Anmeldenummer: PCT/EP2019/066862
(87) Internationale Veröffentlichungsnummer: WO 2020/002347

(56) Entgegenhaltungen:
- EP-A2- 2 556 944
- EP-B1- 2 627 495
- JP-A- 2016 074 090
- US-A1- 2016 375 624

## Beschreibung

Die Erfindung betrifft eine Vorrichtung zur Herstellung von Behältern durch Blasformen, mit wenigstens einer temperierbaren und von einer Formaufnahme gehaltenen Blasform. Solche Vorrichtungen werden als Blasstationen bezeichnet, die in Blasmaschinen eingesetzt werden, z.B. zu mehreren auf einem drehenden Blasrad.

Behälter, vorzugsweise Flaschen, aus blasformfähigem Werkstoff, insbesondere Kunststoff bzw. PET, werden aus Vorformlingen in speziellen Blasformen hergestellt. Eine Blasform ist in einer Formaufnahme innerhalb einer Blasstation gehalten, siehe beispielsweise DE 10 2011 116 192 A1. Die Formaufnahme wird auch als Formträger oder Außenschale bezeichnet und ist vorzugsweise entlang einer aufrechten Ebene in zwei Hälften geteilt, welche zur Aufnahme der Blasform auseinander bewegt werden. Die Blasform wird auch als Blasformeinsatz oder Innenschale bezeichnet und ist vorzugsweise dreiteilig ausgebildet, nämlich mit zwei Formeinsätzen und einem Bodeneinsatz. Die beiden Formeinsätze werden auch als Formschalen oder Formhälften bezeichnet und weisen innen beispielsweise einen Negativabdruck einer Flaschenhälfte (ohne Boden) auf. Beim Blasformen muss der Blasformeinsatz den beim Blasformen auftretenden Innendruck aufnehmen, ohne aufzugehen. Das heißt, der Blasformeinsatz muss durch die Formaufnahme zusammengehalten werden. Auch darf sich der Blasformeinsatz nicht verformen. Entsprechend liegen Außenflächen des Blasformeinsatzes an Innenwandungen der Formaufnahme möglichst vollflächig an. Der Blasformeinsatz besteht vorzugsweise aus Aluminium, für spezielle Anwendungen auch aus Edelstahl.

Zur genauen Temperaturführung beim Blasformen ist es bekannt, die Formaufnahme zu temperieren, siehe beispielsweise EP 2 556 944 A2 und EP 2 422 956 A2. Dadurch kann der Blasformeinsatz in seiner Temperatur gesteuert werden. Dies ist besonders relevant in Verbindung mit einem sogenannten Relax-Verfahren oder Hotfill-Verfahren. Dabei werden heiße Flüssigkeiten in PET-Flaschen abgefüllt. Hierfür sollen die Behälter nach dem Blasformen für eine bestimmte Zeit auf einer höheren Temperatur gehalten werden, damit Ausgleichsprozesse stattfinden können und beim Heißabfüllen die Behälter nicht deformiert werden. Es ist dabei bekannt die Formhälften und die Bodenform unterschiedlich zu temperieren, z.B. nur die Formhälften auf eine höhere Temperatur zu heizen und die Bodenform zu kühlen.

Die US 2016/0375624 A1 beschreibt unterschiedliche Möglichkeiten der Temperierung von Formhälften und nennt die Verwendung von heißem Dampf, Wasser oder Öl, das durch die Formen zirkuliert. Alternativ könne eine dünne Innenflächenschicht der Form kontaktlos beheizt werden, z. B. durch die Verwendung von elektromagnetischer Reaktionswechselwirkung oder Infrarotheizung oder Ultraschallerwärmung. Erwähnt wird, dass z. B. Induktionsspulen in die Form eingebettet sein und zum Erwärmen und Kühlen der Form verwendet werden können. In der JP 2016 074 090 weisen die Seitenformhälften und die Bodenform Heizspulen auf, die in kontrollierter Weise mit elektrischer Energie beaufschlagt eine Temperierung der Form erlauben. Aufgabe der Erfindung ist die Schaffung einer Vorrichtung mit einer neuartigen Heizung zum Temperieren der Blasform.

Zur Lösung der Aufgabe weist die Vorrichtung die Merkmale des Anspruchs 1 auf. Danach ist eine induktiv wirkende Heizung vorgesehen, als Spezialform einer elektrischen Beheizung. Dabei ist die Blasform erfindungsgemäß mittelbar induktiv beheizbar. Das Grundprinzip einer Induktionsheizung ist bekannt und wird beispielsweise in Induktionskochfeldern angewendet. Eine mittelbare Beheizung liegt insbesondere dann vor, wenn die Heizung Teil der Formaufnahme ist, die Wärmeerzeugung in Bauteilen der Formaufnahme stattfindet und die Wärme von dort an die Blasform übertragen wird. Ein Induktor wirkt über ein hochfrequentes Magnetfeld auf einen vom Induktor beabstandeten Adapter ein, der sich aufheizt und wiederum die Blasform aufwärmt, ohne direkt mit dem sich an die Blasform anlegenden Behälter in Berührung zu kommen. Eine davon zu unterscheidende unmittelbare Beheizung der Blasform liegt vor, wenn die Wärme unmittelbar in der Blasform erzeugt wird. Erfindungsgemäß kann z.B. lediglich die Bodenform mit einer induktiv wirkenden Heizung ausgestattet sein, nur die Formhälften, oder sowohl die Bodenform als auch die Formhälften.

Ein Vorteil der Erfindung besteht darin, dass im Stand der Technik eine Beheizung der Formhälften häufig über Heizkreisläufe erfolgt, z.B. über einen Kreislauf für Heißwasser. Bekannt ist auch die Verwendung anderer Heizflüssigkeiten, z.B. von Öl. Die Bodenform wurde zudem häufig an einen Kühlkreislauf angeschlossen für eine Kühlflüssigkeit, z.B. für Kühlwasser. Mit der Erfindung ist es möglich z.B. die Formhälften induktiv zu beheizen und nur noch den einen Kühlkreislauf für die Bodenform beizubehalten, während der zweite Kreislauf, nämlich der für die Heizflüssigkeit entfallen kann. Erfindungsgemäß ist somit eine Vorrichtung mit einer induktiv wirkenden Heizung für die Formhälften und mit einem Kühlflüssigkeitskreislauf für die Bodenform.

Nach der Erfindung weist die Formaufnahme mehrere Induktoren auf. Der Induktor ist das Kernstück einer Induktionsheizung, nämlich die Spule zur Erzeugung eines insbesondere hochfrequenten Magnetfeldes, mit der in einem elektrischen Leiter ein Stromfluss induziert wird. Grundsätzlich können auch mehrere Induktoren nebeneinander, übereinander und/oder hintereinander vorgesehen sein. Auf diese Weise können unterschiedliche Bereiche unterschiedlich temperiert werden, je nach Ansteuerung der Induktoren. Es lässt sich dadurch auch ein preferential heating innerhalb der Blasform realisieren, also das gezielte Erzeugen eines Temperaturprofiles in Umfangsrichtung und/oder in Längsrichtung der Blasform. Dies ist besonders gut möglich, wenn erfindungsgemäß mehrere Induktoren in einer zweidimensionalen Matrixanordnung (mit mehreren Induktoren sowohl in Umfangs- als auch in Längsrichtung der Formaufnahme) angeordnet und z.B. geeignet strombeaufschlagt werden, z.B. in gruppierter Weise.

Nach einem weiteren Gedanken der Erfindung kann der Induktor, bevorzugt jeder der mehreren Induktoren, wenigstens eine Spule mit einer Spulenachse senkrecht zu einer Innenwand der Formaufnahme aufweisen. Entsprechend der Außenkontur der Blasform ist die Innenwand der Formaufnahme gekrümmt. Die Spulenachse verläuft dann vorzugsweise senkrecht zu einer Tangente an der Krümmung. Dadurch wird ein relativ zur Blasformkontur gleichmäßiges Magnetfeld ausgebildet. So sind eine gleichmäßige Wärmeerzeugung und -abgabe möglich.

Nach einem weiteren Gedanken der Erfindung kann die Innenwand der Formaufnahme zur Aufnahme des Induktors mit einer Vertiefung versehen sein, bevorzugt mit jeweils einer Vertiefung für jeweils einen der Induktoren. Der Induktor ist von innen in die Vertiefung vorzugsweise passgenau eingesetzt. Zusätzlich können Vertiefungen für Verkabelungen zwischen benachbarten Induktoren vorgesehen sein.

Nach einem weiteren Gedanken der Erfindung können die Formaufnahme und/oder die Blasform mit wenigstens einem Adapter versehen sein, welcher durch den Induktor induktiv erwärmbar ist, wobei bevorzugt mehrere Adapter vorgesehen sind, bevorzugt ebenfalls in einer Matrixanordnung analog zu der vorstehend beschriebenen Anordnung der Induktoren. Der Adapter ist oder beinhaltet den elektrischen Leiter, in dem der durch das hochfrequente Magnetfeld des Induktors induzierte Strom fließt. Im Adapter entsteht unmittelbar die durch Induktion erzeugte Wärme. Vom Adapter wird die Wärme auf die Blasform übertragen. Entsprechend wird die Blasform durch den Adapter mittelbar induktiv beheizt.

Nach einem weiteren Gedanken der Erfindung kann der Adapter, bevorzugt jeder der mehreren Adapter, einen Teil der Innenwand der Formaufnahme bilden. Die Kontur der Innenwand der Formaufnahme ergibt sich unter anderem durch die Kontur des Adapters, in Abhängigkeit von der Kontur der Außenwand der Blasform. Alternativ kann der Adapter, bevorzugt jeder der mehreren Adapter, Teil der Außenwand der Blasform sein.

Nach einem weiteren Gedanken der Erfindung kann der Adapter, bevorzugt jeder der mehreren Adapter ganz, überwiegend oder teilweise aus ferromagnetischem Werkstoff bestehen. Dadurch erwärmt sich der Adapter besonders gut.

Nach einem weiteren Gedanken der Erfindung kann die Formaufnahme an ihrer Innenwand wenigstens eine Adapterschicht aufweisen, welche induktiv erwärmbar ist. Die Adapterschicht kann sich aber auch über die Außenwand der Blasform erstrecken. Die Innenwand der Blasform bleibt dabei mittelbar induktiv beheizt.

Die Gestalt und die Anordnung des Induktors oder der mehreren Induktoren ist vorzugsweise an die Form und Anordnung des Adapters bzw. der mehreren Adapter angepasst. Wenn mehrere Adapter nebeneinander, übereinander und/oder hintereinander vorgesehen sind, insbesondere in einer Matrixanordnung, sollten auch die Induktoren in zugeordneter Weise angeordnet und geformt sein. Dies würde z.B. das gezielte Erzeugen eines Temperaturprofiles in Umfangsrichtung und/oder in Längsrichtung der Blasform begünstigen, indem die Induktoren in geeigneter Weise strombeaufschlagt werden, z.B. in gruppierter Weise, um eine gewünschte unterschiedliche Heizleistung zur Erzeugung des Temperaturprofiles zu erreichen.

Nach einem weiteren Gedanken der Erfindung kann die Adapterschicht ganz, überwiegend oder teilweise aus ferromagnetischem Werkstoff bestehen. Vorteilhafterweise handelt es sich um ein ferromagnetisches Blech.

Nach einem weiteren Gedanken der Erfindung kann die Formaufnahme an ihrer Innenwand wenigstens einen wärmeisolierenden Bereich aufweisen, bevorzugt eine Isolatorschicht. Bei Verwendung einer Adapterschicht befindet sich der wärmeisolierende Bereich noch unterhalb der Adapterschicht, also zwischen Adapterschicht und Innenwand der Formaufnahme. Bei Anordnung mehrerer verteilter Adapter befindet sich ein wärmeisolierender Bereich vorzugsweise zwischen benachbarten Adaptern. Ziel ist jeweils eine Wärmeisolierung der Formaufnahme gegenüber der Blasform. Die erwärmte Blasform soll die Wärme nicht an die Formaufnahme zurückübertragen. Der wärmeisolierende Bereich kann vorzugsweise aus einer oder mehreren Schichten bestehen und auch Hohlräume oder Luftschichten beinhalten. So kann z.B. zwischen Induktor und einem zugeordneten Adapter ein Isolator angeordnet sein oder z.B. ein Luftspalt verbleiben oder beides. Bevorzugt ist die Isolatorschicht, z.B. als flächiger Zuschnitt ausgebildet, zwischen benachbarten Induktoren angeordnet und die mit Induktoren versehenen Bereiche freilassend ausgebildet.

Nach einem weiteren Gedanken der Erfindung können Formaufnahme und/oder Blasform ganz, überwiegend oder teilweise aus nicht-ferromagnetischem Werkstoff bestehen, insbesondere aus Aluminium. Vorzugsweise sind davon ausgenommen der Adapter und/oder die Adapterschicht.

Gegenstand der Erfindung ist auch ein Verfahren zur Herstellung von Behältern durch Blasformen, insbesondere in Verbindung mit einem Verfahren, vorzugsweise einem Relax-Verfahren oder Hotfill-Verfahren, bei dem die Behälter mit erwärmter oder heißer Flüssigkeit befüllt werden, wobei die Behälter aus Vorformlingen in einer Blasform hergestellt werden, und wobei die Blasform vor, während und/oder nach der Formung der Behälter temperiert wird. Erfindungsgemäß ist vorgesehen, dass die Blasform mittelbar induktiv beheizt wird. Mittelbar bedeutet in diesem Fall, dass eine Formaufnahme für die Blasform induktiv aufgeheizt wird und die Wärme an die Blasform abgibt. Ein Induktor wirkt über ein hochfrequentes Magnetfeld auf einen vom Induktor beabstandeten Adapter ein, der sich aufheizt und wiederum die Blasform aufwärmt, ohne direkt mit dem sich an die Blasform anlegenden Behälter in Berührung zu kommen.

Weitere Merkmale der Erfindung ergeben sich aus der Beschreibung im Übrigen und aus den Patentansprüchen. Vorteilhafte Ausführungsbeispiele der Erfindung werden nachfolgend anhand von Zeichnungen näher erläutert. Es zeigen:
Fig. 1 eine aufrechte Innenansicht einer Hälfte einer Formaufnahme mit Formeinsatz und Behälter (PET-Flasche),
Fig. 2 die Formaufnahmehälfte gemäß Fig. 1, jedoch ohne Formeinsatz und Behälter,
Fig. 3 einen Schnitt durch die Darstellung in Fig. 1 entlang der Linie A-A,
Fig. 4 ein Detail B aus Fig. 3
Fig. 5 die Formaufnahmehälfte entsprechend Fig. 2, jedoch in einer um 90° gedrehten
Ansicht (Seitenansicht),
Fig. 6 einen Schnitt durch die Darstellung gemäß Fig. 5 entlang der Linie C-C,
Fig. 7 das Detail E aus Fig. 6
Fig. 8 einen Schnitt durch die Darstellung gemäß Fig. 5 entlang der Linie D-D,
Fig. 9 das Detail F aus Fig. 8,
Fig. 10 einen Schnitt durch die Darstellung in Fig. 8 entlang der Linie G-G,
Fig. 11 eine Explosionsdarstellung zu einem weiteren Ausführungsbeispiel.

Ohne Beschränkung der Allgemeinheit beziehen sich die Ausführungsbeispiele auf Formhälften. Die Erfindung wird durch die Ansprüche dargelegt.

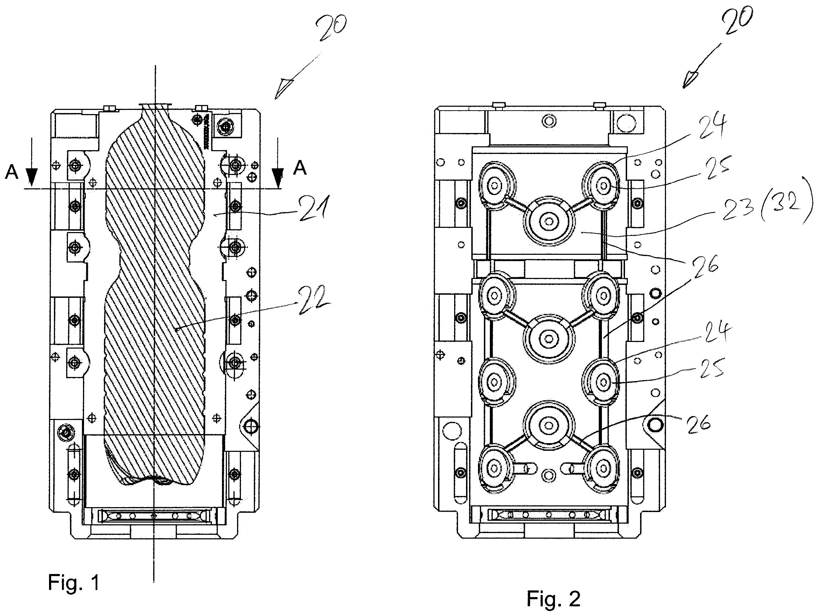

In Fig. 1 erkennbar ist eine Innenansicht einer Formaufnahmehälfte 20 als Teil einer nicht näher gezeigten Formaufnahme, mit einem Formeinsatz 21 als Teil einer Blasform und mit einem im Formeinsatz aufgenommenen Behälter, nämlich einer Flasche 22, hergestellt aus einem Vorformling aus PET.

In Fig. 2 ist dieselbe Formeinsatzhälfte 20 dargestellt, jedoch ohne Formeinsatz 21 und ohne Flasche 22. Erkennbar sind in einer konkav gekrümmten Innenwand 23 der Formaufnahmehälfte 20 vorgesehene Vertiefungen 24, jeweils mit einem darin eingesetzten Induktor 25 als Teil einer Induktionsheizung.

In dieser Ausführungsform sind insgesamt 11 Induktoren 25 in die Innenwand 23 eingesetzt. Ziel ist eine möglichst gleichmäßige Wärmeerzeugung und Verteilung bei gleichzeitiger Optimierung der hierfür erforderlichen Verkabelung. Möglich ist deshalb auch eine andere Anzahl an Induktoren. Zugleich können durch gezielte Ansteuerung der Induktoren 25 unterschiedliche Bereiche unterschiedlich erwärmt werden, z.B. um ein sogenanntes preferential heating zu erreichen, also die Erzeugung eines gewünschten Temperaturprofiles in Umfangs- und/oder Längsrichtung der Formhälften.

Teilweise sind zwischen benachbarten Induktoren 25 Kabelkanäle 26 in die Innenwand 23 als geradlinig verlaufende Vertiefungen eingelassen.

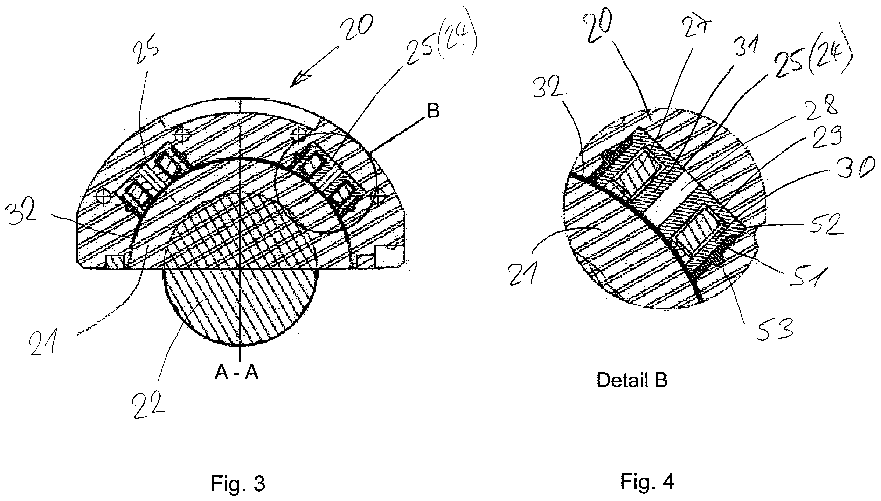

In den Figuren 3 und 4 ist eine erste Ausführungsform des Induktors 25 erkennbar. Dieser weist eine Spule 27 auf, die in einem Spulentopf 28 liegt. Der Spulentopf 28 ist ein Ferrit und weist zusätzlich zu einem Boden 29, einer umlaufenden Außenwand 30 auch einen hohlen Kern 31 auf. Auf diese Weise ist zwischen Außenwand 30 und Kern 31 eine zum Formeinsatz 21 hin offene Aufnahme für die Spule 27 gebildet.

Vorzugsweise ist der Induktor 25 mit einer Vergussmasse 51 eingegossen und somit nicht zugänglich. Hierzu weist der Induktor 25 am Boden 29 einen insbesondere umlaufenden Kragen 52 auf, während ein Raum außerhalb des Kragens 52 mit der Vergussmasse 51 gefüllt ist. Außerdem weist die Vertiefung 24 im Bereich der Vergussmasse 51 eine umlaufende Rille 53 oder eine andere radial gerichtete Vertiefung zur Aufnahme eines Teils der Vergussmasse 51 auf, so dass ein Formschluss gegen eine axiale Bewegung des Induktors 25 entsteht.

Außenwand 30 und Kern 31 sind in dieser ersten Ausführungsform des Induktors 25 an die Krümmung der Innenwand 23 angepasst. In diesem Fall ist als Bestandteil der Innenwand 23 als abschließende und sichtbare Lage eine Adapterschicht 32 vorgesehen. Diese besteht aus ferromagnetischem Werkstoff. In der Adapterschicht 32 wird ein Stromfluss induziert, sobald an der Spule 27 eine hochfrequente Spannung anliegt.

Zwischen Induktor 25 und Adapterschicht 32 ist ein nicht näher eingezeichneter Luftspalt von vorzugsweise etwa 0,5 mm vorhanden. Neben dem Induktor 25 sind zwischen Adapterschicht 32 und Formaufnahmehälfte 20 im Übrigen eine nicht näher gezeigte wärmeisolierende Schicht oder ein wärmeisolierender Bereich vorgesehen.

Der Formeinsatz 21 liegt zur bestmöglichen Wärmeübertragung vollflächig an der Adapterschicht 32 an und besteht selbst vorzugsweise aus einem nichtferromagnetischen Werkstoff, etwa aus Aluminium oder einer Aluminiumlegierung, ebenso wie die Formaufnahmehälfte 20. Aluminium ist als Werkstoff für den Adapter oder für die Adapterschicht aufgrund des geringen elektrischen Widerstands ungünstig oder sogar ungeeignet.

Da sich die Adapterschicht 32 über nahezu die volle Innenwandung 23 der Formaufnahmehälfte 20 erstreckt, ergibt sich eine sehr gute Wärmeverteilung und -übertragung auf den Formeinsatz 21.

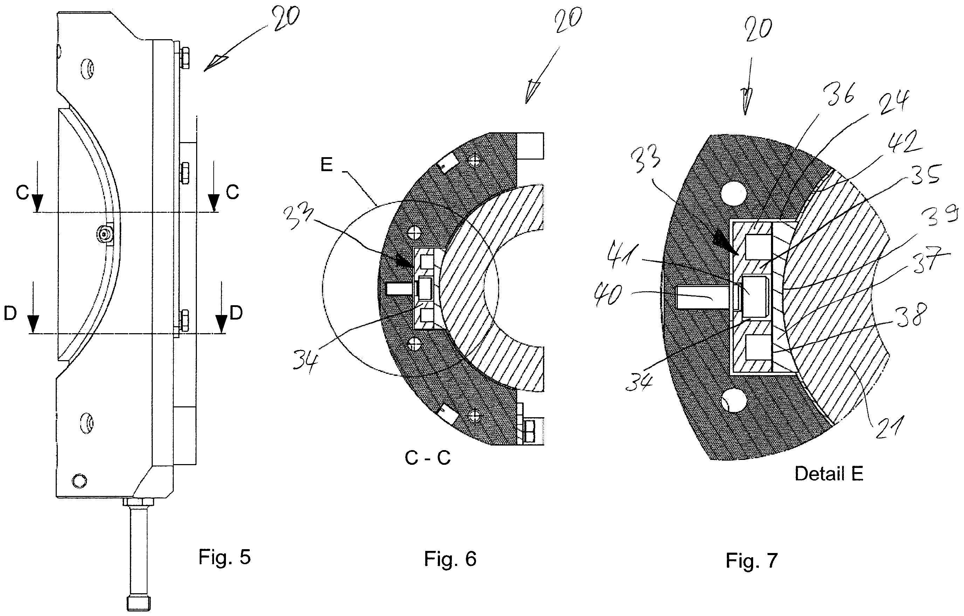

Die Figuren 5, 6, 7 zeigen eine zweite Ausführungsform, nämlich einen Induktor 33 in anderer Bauweise. Auch hier ist eine Spule (nicht gezeigt) in einem Spulentopf 34 vorgesehen. Kern 35 und Außenwand 36 sind hier nicht an die Außenkontur des Formeinsatzes 21 angepasst. Vielmehr weist der Induktor 33 den in Fig. 7 sichtbaren, rechteckigen Querschnitt auf.

Zur Anpassung an die Außenkontur des Formeinsatzes 21 und zur Erzeugung der Wärme ist ein Adapter 37 vorgesehen, welcher in der Vertiefung 24 auf dem Induktor 33 sitzt und dort insbesondere vergossen ist. Dabei ist zwischen Induktor 33 und Adapter 37 erneut ein Luftspalt 38 von vorzugsweise etwa 0,5 mm vorgesehen.

Der Adapter 37 weist denselben Außendurchmesser auf wie der Induktor 33. Eine dem Luftspalt 38 gegenüberliegende gekrümmte Wandung 39 des Adapters 37 liegt an der Außenkontur des Formeinsatzes 21 an, sodass eine gute Wärmeübertragung gewährleistet ist.

In dieser zweiten Ausführungsform ist der Induktor 33 mit einem Bolzen 40 in der Vertiefung 24 mittig befestigt. Ein Bolzenkopf 41 sitzt dabei im Kern 35.

Der Formeinsatz 21 ist außerhalb der Vertiefungen 24 in dieser zweiten Ausführungsform innenseitig mit einem wärmeisolierenden Bereich oder einer Isolierschicht 42 versehen, welche an der Außenkontur des Formeinsatzes 21 anliegen kann. Dadurch wird eine Wärmeübertragung vom erwärmten Formeinsatz 21 zurück zur Formaufnahmehälfte 20 deutlich vermindert.

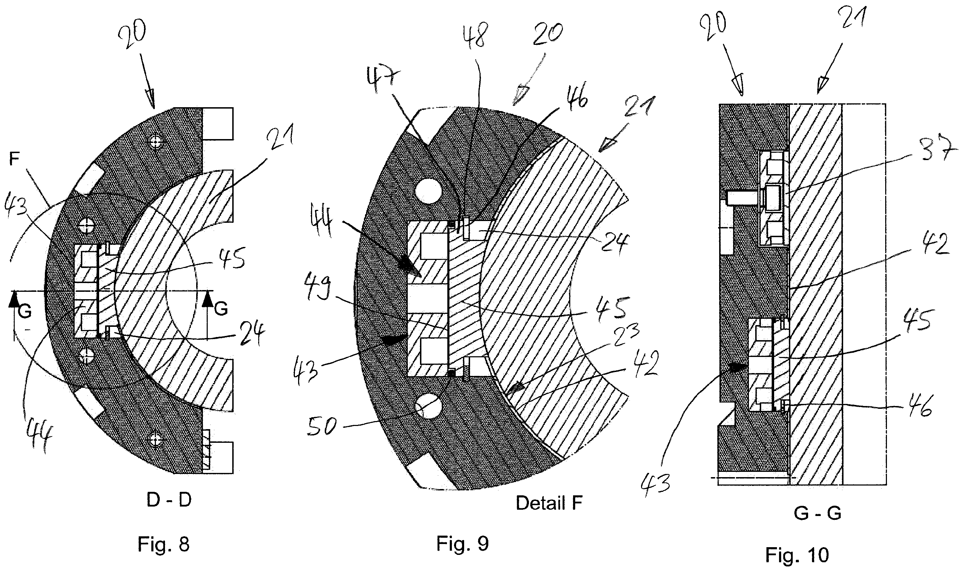

Anhand der Figuren 8 bis 10 wird eine dritte Ausführungsform eines Induktors 43 erläutert. Dieser weist ebenso wie der Induktor 33 der zweiten Ausführungsform einen Spulentopf 44 mit rechteckigem Querschnitt auf. Auch ist ein Adapter 45 analog zum Adapter 37 vorgesehen. Jedoch ist der Adapter 45 hier durch einen Sicherungsring 46 gehalten, welcher einerseits an einem dem Spulentopf 44 zugewandten umlaufenden Kragen 47 des Adapters 45 anliegt und andererseits in einer umlaufenden Rille 48 in der Vertiefung 24 gehalten ist. Zwischen Adapter 45 und Spulentopf 44 ist wiederum ein Luftspalt 49 von vorzugsweise 0,5 mm vorgesehen. Außerdem ist im Bereich des Luftspalts 49 ein Federring 50 zwischen Adapter 45 und Spulentopf 44 angeordnet. Der Federring 50 ist in axialer Richtung elastisch, drückt den Adapter 45 an den Formeinsatz 21 an und ist vorzugsweise ein Elastomer. Der Sicherungsring 46 begrenzt den möglichen axialen Hub des Adapters 45. Ohne anliegenden Formeinsatz 21 steht der Adapter 45 durch den Druck des Federrings 50 leicht aus der Vertiefung 24 heraus bzw. über die Innenwand 23 über.

In Fig. 10 sind der Induktor 33 der zweiten Ausführungsform und der Induktor 43 der dritten Ausführungsform übereinander erkennbar. Der Vorteil dieser beiden Ausführungsformen liegt in der Verwendung von relativ einfachen Induktoren, die in großen Stückzahlen kostengünstig verfügbar sind. Die Anpassung an den hier vorgesehenen besonderen Verwendungszweck erfolgt durch die speziell ausgebildeten und angeordneten Adapter 37, 45.

Wie im Zusammenhang mit den voranstehenden Ausführungsbeispielen dargestellt, sind Adapter 37, 45 und Adapterschicht 32 jeweils der Formaufnahme bzw. der Formaufnahmehälfte 20 zugeordnet. Die Anordnung der Adapterschicht 32 an der Formaufnahmehälfte 20 hat den Vorteil, dass letztere im Bereich ihrer Innenwand 23 abgeschlossen ist. Alternativ weist in einem nicht gezeigten Ausführungsbeispiel der Formeinsatz 21 einen Adapter oder eine Adapterschicht auf seiner dem Formträger zugewandten Seite auf, in denen durch den Induktor 25, 33, 43 ein Strom erzeugt wird. Der Vorteil dieser Ausführung liegt in der zuverlässigen Anlage am Formeinsatz und der dadurch erreichten schnelleren und direkteren Erwärmung des Formeinsatzes 21. Beispielsweise besteht der Formeinsatz 21 aus Aluminium und weist an seiner Außenseite, nämlich an der der dem Formträger zugewandten Site, eine Adapterschicht aus Stahlblech auf, analog zur Adapterschicht 32. Wichtig ist ein ausreichender und genau definierter Luftspalt oder ein durch einen isolierenden Werkstoff eingestellter Abstand zwischen Induktor und Adapterschicht.

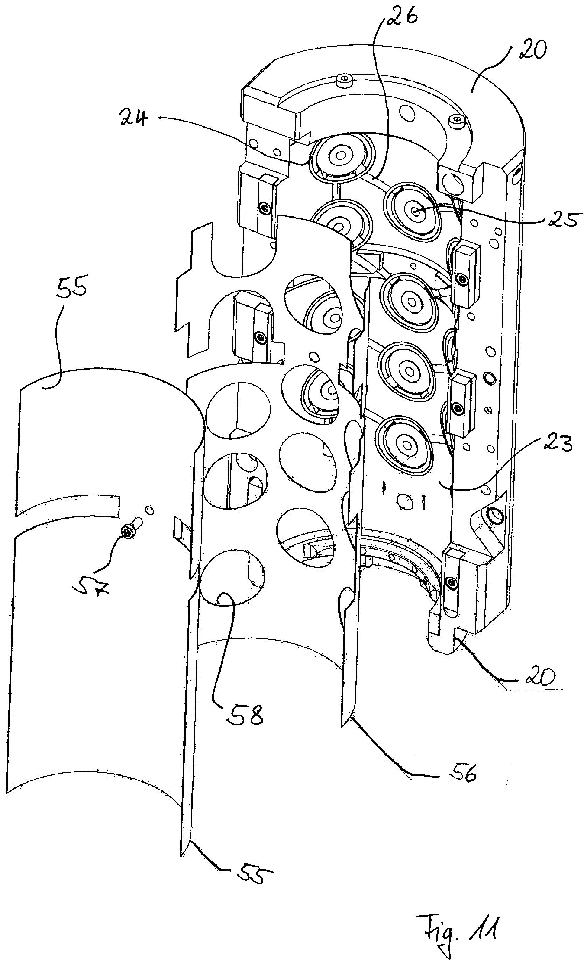

Fig. 11 zeigt in einer Explosionsdarstellung ein weiteres Ausführungsbeispiel. In der Innenwand 23 der Formaufnahmehälfte 20 sind wie auch schon zu den vorhergehenden Ausführungsbeispielen erläutert Induktoren 25 eingelassen. Der von diesen Induktoren 25 magnetfeldbeaufschlagte Adapter ist im dargestellten Beispiel als ein der Kontur der Innenwand 23 der Formaufnahmehälfte 20 folgend gekrümmte Adapterplatte 55 dargestellt, die thermisch von der Formaufnahmehälfte 20 getrennt ausgeführt ist, nämlich indem ein Isolatorzuschnitt 56 dazwischen angeordnet wird. Die Adapterplatte 55 ist mit dem dazwischen angeordneten Isolatorzuschnitt 56 an die Formaufnahmehälfte 20. z.B. mittels einer Schraube anschraubbar. Nicht dargestellt ist der Formeinsatz 21, der sich der Adapterplatte 55 anschließen und an dieser Adapterplatte 55 in thermischem Kontakt anliegen würde. Der Isolatorzuschnitt 56 ist ebenfalls der Kontur der Innenwand 23 der Formaufnahmehälfte 20 folgend gekrümmt ausgeformt und er weist Ausnehmungen 58 auf, um im montierten Zustand die Induktoren 25 unabgedeckt lassen zu können. Es könnte auch eine Isolatorzuschnitt 56 ohne solche Ausnehmungen 58 verwendet werden, z.B. wenn das Isolatormaterial das vom Induktor 25 erzeugte hochfrequente Magnetfeld weitgehend unabgeschwächt durchlässt, ähnlich oder identisch zu einem Luftspalt, wie er in den zuvor beschriebenen Ausführungsbeispielen zwischen Induktor und Adapter vorgesehen war. Auch in den bisherigen Ausführungsbeispielen könnten die Luftspalte durch Isolatoren aus einem geeigneten Material ersetzt werden. Das in Fig. 11 gezeigte Ausführungsbeispiel weist erhebliche Montagevorteile auf, da sowohl die Adapterplatte 55 als auch der Isolatorzuschnitt 56 schnell montierbar sind.

## Patentansprüche

1. Vorrichtung zur Herstellung von Behältern durch Blasformen, mit wenigstens einer temperierbaren und von einer Formaufnahme gehaltenen Blasform, nämlich mit einem von einem Bodenformträger gehaltenen Bodeneinsatz und/oder von Formhälftenträgern gehaltenen Formeinsätzen, **gekennzeichnet durch** eine induktiv wirkende Heizung, welche den Bodeneinsatz und/oder die Formeinsätze mittelbar induktiv aufheizt, wobei die Formaufnahme mehrere Induktoren (25, 33, 43) aufweist, die voneinander beabstandet angeordnet sind, nämlich in einer Anordnung in einer zweidimensionalen Matrix mit mehreren Induktoren in Umfangsrichtung und mit mehreren Induktoren in Längsrichtung der Formaufnahme.

2. Vorrichtung nach Anspruch 1, **dadurch gekennzeichnet, dass** jeder der Induktoren wenigstens eine Spule (27) mit einer Spulenachse senkrecht zu einer Innenwand (23) der Formaufnahme aufweist.

3. Vorrichtung nach Anspruch 1 oder 2, **dadurch gekennzeichnet, dass** eine Innenwand (23) der Formaufnahme zur Aufnahme eines Induktors (25, 33, 43) mit einer Vertiefung (24) versehen ist, nämlich mit jeweils einer Vertiefung für jeweils einen der mehreren Induktoren.

4. Vorrichtung nach einem der Ansprüche 1 bis 3, **dadurch gekennzeichnet, dass** die Formaufnahme und/oder die Blasform mit wenigstens einem Adapter (37, 45) versehen sind, welcher durch den Induktor (33, 43) induktiv erwärmbar ist, wobei bevorzugt mehrere Adapter (37, 45) vorgesehen sind, die voneinander beabstandet angeordnet sind, bevorzugt in einer Anordnung in einer zweidimensionalen Matrix mit mehreren Induktoren in Umfangsrichtung und mit mehreren Induktoren in Längsrichtung der Formaufnahme bzw. der Blasform.

5. Vorrichtung nach Anspruch 4, **dadurch gekennzeichnet, dass** der Adapter (37, 45), bevorzugt jeder der mehreren Adapter einen Teil der Innenwand der Formaufnahme oder einen Teil der Außenwand der Blasform bildet.

6. Vorrichtung nach Anspruch 4 oder 5, **dadurch gekennzeichnet, dass** der Adapter (37, 45), bevorzugt jeder der mehreren Adapter ganz, überwiegend oder teilweise aus ferromagnetischem Werkstoff besteht.

7. Vorrichtung nach einem der Ansprüche 1 bis 6, **dadurch gekennzeichnet, dass** die Formaufnahme an ihrer Innenwand (23) oder die Blasform an ihrer Außenwand wenigstens eine Adapterschicht (32) aufweisen, welche induktiv erwärmbar ist.

8. Vorrichtung nach Anspruch 7, **dadurch gekennzeichnet, dass** die Adapterschicht (32) ganz, überwiegend oder teilweise aus ferromagnetischem Werkstoff besteht.

9. Vorrichtung nach einem der Ansprüche 1 bis 8, **dadurch gekennzeichnet, dass** die Formaufnahme an ihrer Innenwand wenigstens einen wärmeisolierenden Bereich aufweist, bevorzugt eine Isolatorschicht, die bevorzugt als flächiger Isolatorzuschnitt ausgeführt ist und die bevorzugt zwischen benachbarten Induktoren angeordnet und dabei nur die Bereiche mit den Induktoren freilassend ausgebildet lässt.

10. Vorrichtung nach einem der Ansprüche 1 bis 9, **dadurch gekennzeichnet, dass** Formaufnahme und/oder Blasform ganz, überwiegend oder teilweise aus nicht-ferromagnetischem Werkstoff bestehen, insbesondere aus Aluminium.

11. Vorrichtung nach einem der Ansprüche 1 bis 10, **gekennzeichnet, durch** eine induktiv wirkende Heizung für die Formhälften und durch einen Kühlflüssigkeitskreislauf, insbesondere für die Bodenform.

12. Vorrichtung nach einem der vorhergehenden Ansprüche 1 bis 11 mit mehreren Adaptern und mehren Induktoren, **dadurch gekennzeichnet, dass** die Induktoren in zugeordneter Weise zu den Adaptern angeordnet und geformt sind, wobei bevorzugt die Induktoren für eine unterschiedliche Heizleistung angesteuert sind, bevorzugt in gruppierter Weise.

13. Blasmaschine zur Herstellung von Behältern durch Blasformen, mit mehreren Vorrichtungen nach einem der vorhergehenden Ansprüche, wobei diese bevorzugt auf einem drehangetriebenen Blasrad angeordnet sind.

14. Verfahren zur Herstellung von Behältern durch Blasformen, insbesondere in Verbindung mit einem Verfahren, bei dem die Behälter mit erwärmter oder heißer Flüssigkeit befüllt werden, vorzugsweise einem Relax-Verfahren oder Hotfill-Verfahren, wobei die Behälter aus Vorformlingen in einer Blasform hergestellt werden, und wobei die Blasform vor, während und/oder nach der Formung der Behälter temperiert wird, wobei die Blasform mittelbar induktiv beheizt wird, **gekennzeichnet durch** die Verwendung einer Vorrichtung nach einem der vorhergehenden Ansprüche.

## Claims

1. Device for manufacturing containers by means of blow moulding, comprising at least one blow mould which can be tempered and held by a mould holder, namely with a bottom insert held by a mould-base support and/or mould inserts held by mould-half supports, **characterized by** an inductive heater which indirectly inductively heats the bottom insert and/or mould inserts, wherein the mould holder comprises a plurality of inductors (25, 33, 43), which are spaced apart from each other, namely in an arrangement in a two-dimensional matrix with a plurality of inductors in the circumferential direction and with a plurality of inductors in the longitudinal direction of the mould holder.

2. The device according to Claim 1, **characterized in that** each of the inductors comprises at least one coil (27) with a coil axis perpendicular to an inner wall (23) of the mould holder.

3. The device according to Claim 1 or 2, **characterized in that** an inner wall (23) of the mould holder for holding an inductor (25, 33, 43) is provided with a recess (24), namely, with a recess for each of the plurality of inductors.

4. The device according to any one of the Claims 1 to 3, **characterized in that** the mould holder and/or the blow mould are provided with at least one adapter (37, 45) which can be inductively heated by the inductor (33, 43), wherein, preferably, a plurality of adapters (37, 45) are provided, which are arranged at a distance from each other, preferably in an arrangement in a two-dimensional matrix with a plurality of inductors in the circumferential direction and with a plurality of inductors in the longitudinal direction of the mould holder or blow mould.

5. The device according to Claim 4, **characterized in that** the adapter (37, 45), preferably, each of the plurality of adapters forms a part of the inner wall of the mould holder or part of the outer wall of the blow mould.

6. The device according to Claim 4 or 5, **characterized in that** the adapter (37, 45), preferably each of the plurality of adapters, consists wholly, predominantly or partially of a ferromagnetic material.

7. The device according to any one of the Claims 1 to 6, **characterized in that** the mould holder on its inner wall (23) or the blow mould on its outer wall comprises at least one adapter layer (32) which can be inductively heated.

8. The device according to Claim 7, **characterized in that** the adapter layer (32) consists wholly, predominantly or partially of a ferromagnetic material.

9. The device according to any one of the Claims 1 to 8, **characterized in that** the mould holder on its inner wall comprises at least one heat-insulating area, preferably, an insulator layer which is preferably designed as a flat insulator cut and which is preferably arranged between adjacent inductors, thereby leaving only the areas with the inductors free.

10. The device according to any one of the Claims 1 to 9, **characterized in that** the mould holder and/or blow mould consist wholly, predominantly or partly of a non-ferromagnetic material, in particular, aluminium.

11. The device according to any one of the Claims 1 to 10, **characterized by** an inductive heater for the mould halves and by a coolant circuit, in particular, for the mould base.

12. The device according to any one of the preceding Claims 1 to 11 with a plurality of adapters and a plurality of inductors, **characterized in that** the inductors are arranged and shaped in an assigned manner to the adapters, wherein inductors are preferably driven to provide a different heating power, preferably in a grouped manner.

13. Blow moulding machine for manufacturing containers by means of blow moulding, comprising a plurality of devices according to any one of the preceding claims, wherein these are preferably arranged on a rotary driven blowing wheel.

14. Method for manufacturing containers by means of blow moulding, in particular, in conjunction with a method in which the containers are filled with heated or hot liquid, preferably a relax method or hotfill method, wherein the containers are made from preforms in a blow mould, and wherein the blow mould is tempered before, during and/or after the moulding of the containers, wherein the blow mould is indirectly inductively heated, **characterized by** the use of a device according to any one of the preceding claims.

## Revendications

1. Dispositif de fabrication de récipients par moulage par soufflage, avec au moins un moule de soufflage pouvant être tempéré maintenu dans un logement du moule et comprenant un élément de fond maintenu par un support de fond de moule et/ou des inserts de moule maintenus par des supports de demi-moule, **caractérisé par** un chauffage à effet inductif, lequel chauffe indirectement par induction l'élément de fond et/ou les inserts de moule, le logement du moule présentant plusieurs inducteurs (25, 33, 43) agencés avec un certain écartement selon une matrice bidimensionnelle avec plusieurs inducteurs en sens périphérique et plusieurs inducteurs en sens longitudinal du logement du moule.

2. Dispositif selon la revendication 1, **caractérisé en ce que** chacun des inducteurs comporte au moins une bobine (27) dont l'axe est perpendiculaire à une paroi intérieure (23) du logement de moule.

3. Dispositif selon la revendication 1 ou 2, **caractérisé en ce qu'**une paroi intérieure (23) du logement de moule est dotée d'une cavité (24) pour y loger un inducteur (25, 33, 43), une cavité étant respectivement prévue pour chacun des inducteurs.

4. Dispositif selon l'une des revendications 1 à 3, **caractérisé en ce que** le logement de moule et/ou le moule de soufflage sont dotés d'au moins un adaptateur (37, 45) lequel peut être inductivement chauffé par l'inducteur (33, 43), plusieurs adaptateurs (37, 45) étant de préférence prévus et agencés avec un certain écartement, de préférence selon une matrice bidimensionnelle avec plusieurs inducteurs en sens périphérique et plusieurs inducteurs en sens longitudinal du logement de moule ou du moule de soufflage.

5. Dispositif selon la revendication 4, **caractérisé en ce que** l'adaptateur (37, 45) ou, de préférence, chacun des adaptateurs s'il y en a plusieurs, forme une partie de la paroi intérieure du logement de moule ou une partie de la paroi extérieure du moule de soufflage.

6. Dispositif selon la revendication 4 ou 5, **caractérisé en ce que** l'adaptateur (37, 45) ou, de préférence, chacun des adaptateurs s'il y en a plusieurs est partiellement ou essentiellement constitué d'un matériau ferromagnétique.

7. Dispositif selon l'une des revendications 1 à 6, **caractérisé en ce que** le logement de moule présente à sa paroi intérieure (23) ou le moule de soufflage présente à sa paroi extérieure au moins une couche d'adaptation (32) laquelle peut être chauffée par induction.

8. Dispositif selon la revendication 7, **caractérisé en ce que** la couche d'adaptation (32) est entièrement, essentiellement ou partiellement constituée d'un matériau ferromagnétique.

9. Dispositif selon l'une des revendications 1 à 8, **caractérisé en ce que** le logement de moule présente à sa paroi intérieure au moins une zone thermo-isolante, de préférence une couche isolante de préférence réalisée sous forme de pièce isolante plate découpée, laquelle est de préférence agencée entre des inducteurs voisins et dont la forme est telle qu'elle laisse libre les zones des inducteurs.

10. Dispositif selon l'une des revendications 1 à 9, **caractérisé en ce que** le logement de moule et/ou le moule de soufflage sont entièrement, essentiellement ou partiellement constitués d'un matériau non ferromagnétique, notamment de l'aluminium.

11. Dispositif selon l'une des revendications 1 à 10, **caractérisé par** un chauffage opérant par induction pour les demi-moules et au moyen d'un circuit de fluide réfrigérant, notamment pour le fond de moule.

12. Dispositif selon l'une des revendications précédentes 1 à 11 avec plusieurs adaptateurs et plusieurs inducteurs, **caractérisé en ce que** les inducteurs sont agencés et façonnés de façon à être respectivement affectés aux adaptateurs, les inducteurs étant de préférence commandés pour fournir différentes puissances de chauffage, et ce de préférence par groupes.

13. Machine de moulage par soufflage pour la fabrication de récipients par moulage par soufflage, avec plusieurs dispositifs selon l'une des revendications précédentes, ces dispositifs étant de préférence agencés sur une roue de soufflage à à entraînement rotatif.

14. Procédé de fabrication de récipients par moulage par soufflage, notamment en combinaison avec un procédé dans le cadre duquel les récipients sont remplis d'un liquide chauffé ou chaud, de préférence un procédé de type Relax ou Hotfill, les récipients étant produits à partir de préformes dans un moule de soufflage et le moule de soufflage étant tempéré par chauffage indirect par induction avant, pendant et/ou après le moulage des récipients, **caractérisé par** l'utilisation d'un dispositif selon l'une des revendications précédentes.
